(19) Europäisches Patentamt
European Patent Office
Office européen des brevets

(11) EP 2 075 279 A1

# (12) EUROPEAN PATENT APPLICATION

(43) Date of publication:
**01.07.2009 Bulletin 2009/27**

(51) Int Cl.:
***C08J 3/24*** *(2006.01)* ***C08K 3/00*** *(2006.01)*

(21) Application number: **07025235.8**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Mnemoscience GmbH**
**52531 Uebach-Palenberg (DE)**

(72) Inventors:
- **Hasson, Ali Abdulla Tareq**
  **52062 Aachen (DE)**
- **Boltersdorf, Dagmar**
  **52372 Kreuzau (DE)**
- **Komoll, Torsten**
  **4700 Eupen (BE)**
- **Cosemans, Maurice**
  **52525 Heinsberg-Waldenrath (DE)**

(74) Representative: **Grünecker, Kinkeldey,**
**Stockmair & Schwanhäusser**
**Anwaltssozietät**
**Leopoldstrasse 4**
**80802 München (DE)**

## (54) Production of shape memory polymer articles by molding processes

(57) The invention relates to a method for the production of a shape memory polymer article in its permanent form, **characterized in that** a composition that includes at least one thermoplastic polymer and a covalently crosslinkable oligomeric composition is shaped by a molding process and thereafter covalently crosslinked by a crosslinking process, and wherein at least one of the thermoplastic polymer or the oligomeric composition includes at least one segment, that can act as a soft segment to fix the temporary form of a shape memory polymer, as well as to shape memory polymer articles obtained by this method.

EP 2 075 279 A1

## Description

## BACKGROUND OF THE INVENTION

### 1. Field of the Invention

The invention relates to a method for producing a shape memory polymer (SMP) article in its permanent form, as well as articles produced therewith, their programming and their use.

### 2. Description of the Related Art

The shape memory effect (SME) or shape memory functionality is a phenomenon already known and established for metal alloys as well as polymers. Shape memory functionality is the ability of a material to temporarily fix a second shape after an elastic deformation and only recover the original (first shape, permanent shape) after application of an external stimulus. The advantageous and intriguing properties of shape memory materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The effect/functionality results from a combination of material structure and specific functionalization processes.

As already indicated above, the first materials known to provide this functionality were metallic shape memory alloys. Recently, shape memory polymers (SMPs) have been developed to replace or augment the use of SMAs, in part because the polymers are light, high in shape recovery ability, easy to manipulate, and economical, and have a better biocompatibility as compared with SMAs. Typical SMPs are, for example, phase segregated linear block copolymers, having a hard segment and a switching (soft) segment, typically thermoplastic materials. The hard segment usually fixes the permanent form and is typically crystalline, with a defined melting point, and the soft segment is typically amorphous, with a defined glass transition temperature. In some embodiments, however, the hard segment is amorphous and has a glass transition temperature rather than a melting point. In other embodiments, the soft segment is crystalline and has a melting point rather than a glass transition temperature. The melting point or glass transition temperature of the soft segment is substantially less than the melting point or glass transition temperature of the hard segment.

As described above, the SME is enabled by the SMP's structure and morphology, but is only available after modification, in particular deformation, of the permanent shape into a temporary shape, a process that is usually called the programming of a SMP. The material can readily recover to its original molded shape following numerous thermal cycles, and a thermoplastic SMP can be heated above the melting point of the hard segment and reshaped and cooled to fix a new original shape. Properties that describe the shape memory capabilities of a material are, for example, the shape recovery of the original shape and the shape fixity of the temporary shape.

When a thermoplastic SMP is heated above the melting point or glass transition temperature of the hard segment, the material can be shaped. This shape, also called the original or permanent shape, can be memorized by cooling the SMP below the melting point or glass transition temperature of the hard segment.

A specific class of SMPs are polymer networks (thermosets) including soft segments (switching segments) and chemical covalent network points / crosslinks, which provide the function of the hard segments, so that for SMP networks the permanent shape is determined by the covalent network structure.

Representative SMPs are disclosed in U.S. Patent Nos. 6,720,402; 6,388,043; 6,160,084; 7,217,744; 6,852,825; and 7,037,984, international publications WO99/42528, WO 99/42147, WO 2004/046221, WO 2004/062706, WO 2004/090042, WO 2005/012388, WO 2005/028534, WO 2007/096708, and European publications EP1846470 and EP 1818348.

SMPs that can form objects which are able to hold more than one shape in memory are known from, for example U.S. Patent Nos. 6,720,402and US 6,388,043 and WO99/42528 These SMPs have shapes in memory that are elicited by a stimulus other than the commonly used change (increase) in temperature, for example the application of light, changes in ionic concentration and/or pH, electric field, magnetic field or ultrasound. EP1818161 discloses specific SMP embodiments, wherein different stimuli are used to mutually independently trigger the release of two or more shapes in memory. Specific SMPs sensitive to light are known from WO 2004/062706, and those sensitive to pH and/or ionic strength from EP1837160 and EP1818346. SMPs especially suitable to control drug release by the SME are disclosed in WO 2004/006885 and U.S. Patent Application Publication No. 2006/0140999.

Current approaches for implanting medical devices, many of which are polymeric in nature, often require complex surgery followed by device implantation. With the introduction of minimally invasive surgery and new developments in the field of shape-memory polymers, it is possible to place/implant a medical device in a compact temporary shape into a confined space such as blood vessels, bile ducts, etc. Upon heating or other stimuli, the compact form will be triggered to recover its permanent, bulky/larger shape. Therefore it is necessary to find ways to form shape memory

polymers into the desired and sometimes complex shapes while taking into regard the special elastomechanical properties of such polymers.

Thermoplastic SMPs typically can be processed using conventional methods like extrusion and injection molding. Such polymers are very versatile and allow a broad range of smart commercial uses. Nevertheless they have some drawbacks for specific applications, such as where precisely reproducible mechanical properties and mechanical long-term stability are needed because thermoplastic SMPs may show viscoelastic effects within the programming cycle and during storage. Thereby the shape memory properties can be weakened perpetually and the shape recovery can be reduced, so that the permanent form is no longer quantitatively retrievable. In addition thermoplastic polymers often show a dissatisfactory mechanical stability, if they have to withstand an extemal force, like e.g. the radial force exerted on a tubular device (e.g., a stent in a vessel). Such can lead to a failure called recoil, whereby the open diameter of a stent is reduced.

The known three dimensionally covalently crosslinked SMP networks (thermosets) usually have a lower tendency for recoil and a better mechanical long-term stability of their shape memory properties compared to SMP thermoplasts, but unfortunately are difficult to handle in conventional processing methods for polymers, and often cannot be processed therewith at all.

Therefore it was an object of the invention to find methods for the convenient and cost efficiently processing of shape memory materials, that have comparable or even better mechanical properties, a higher mechanical long-term stability, and in particular a lower recoil then known SMP systems.

It was also an object of the invention to provide a processing method to advantageously manufacture three dimensional SMP articles (devices) of high quality (e.g., tubes or filaments, and in particular medical devices like stents).

## SUMMARY OF THE INVENTION

The present invention solves the above objects with the method for the production of a shape memory polymer article, articles produced therewith, the programming of the articles to have a shape in memory and the use of the articles of the invention.

## DETAILED DESCRIPTION OF THE INVENTION

One aspect of the invention is a method for producing a shape memory polymer article in its permanent form, characterized in that a moldable composition (moldable composition of the invention) that includes a covalently crosslinkable oligomeric composition (oligomeric composition of the invention) and at least one thermoplastic polymer is shaped by a molding process and thereafter covalently crosslinked by a crosslinking process, and
wherein at least one of the thermoplastic polymer or the oligomeric composition includes at least one segment, that can act as a soft segment to fix the temporary form of a shape memory polymer. Accordingly the present invention provides the subject matter as defined in the claims and the following specification. In embodiments the present invention provides the following:

1. A method for producing a shape memory polymer article in its permanent form comprising a composition comprising at least one thermoplastic polymer and a covalently crosslinkable oligomeric composition, wherein at least one of the thermoplastic polymer and the oligomeric composition comprises at least one segment that can act as a soft segment to fix the temporary form of a shape memory polymer, said process comprising a molding process followed by a crosslinking process, wherein said covalently crosslinkable oligomeric composition is crosslinked.

2. The method according to item 1, wherein said molding process comprises at least one of an injection molding, a compression molding, a transfer molding, an extrusion molding, a blow molding, a rotational molding, a thermoforming, a vacuum forming, a laminating and combinations thereof.

3. The method according to any of the preceding items, wherein said molding process comprises at least one of an injection molding, an extrusion molding, a blow molding, a rotational molding and combination thereof.

4. The method according to any of the preceding items, wherein said molding process is at least one of an injection molding, an extrusion molding and combinations thereof.

5. The method according to any of the preceding items, wherein the product of said molding process is not in contact with a solid material prior to said crosslinking process.

6. The method according to any of the preceding items, wherein said oligomeric composition comprises at least one

segment that can act as a soft segment to fix the temporary form of a shape memory polymer.

7. The method according to any of the preceding items, wherein said composition comprises at least approximately 0.5 weight-% of the at least one thermoplastic polymer and at least approximately 30 weight-% of the crosslinkable oligomeric composition, respectively, in relation to the non-volatile ingredients of said composition.

8. The method according to item 7, wherein said composition comprises from approximately 2 weight-% to approximately 40 weight-% of the at least one thermoplastic polymer and from approximately 40 weight-% to approximately 99.5 weight-% of the crosslinkable oligomeric composition, respectively, in relation to the non-volatile ingredients of said composition.

9. The method according to any of the preceding items, wherein said at least one thermoplastic polymer comprises at least one biodegradable polymer.

10. The method according to any of the preceding items, wherein said at least one thermoplastic polymer comprises at least one of a linear polyester and copolymers thereof.

11. The method according to any of the preceding items, wherein said crosslinkable oligomeric composition comprises at least one biodegradable unit.

12. The method according to any of the preceding items, wherein said crosslinkable oligomeric composition comprises at least one crosslinkable oligomeric compound obtainable by terminal functionalization of an oligomeric polyols.

13. The method according to any of the preceding items, wherein said shape memory polymer article is biodegradable.

14. The method according to any of the preceding items, wherein said crosslinking process is performed at temperatures sufficiently low that the polymer is mechanically stable under the said temperatures.

15. A shape memory polymer article, wherein said shape memory polymer article is produced using a method according to any of the preceding items.

16. The shape memory polymer article according to item 15, wherein said shape memory polymer article comprises at least one of sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

17. The shape memory polymer article according to any of items 15 or 16, wherein said shape memory polymer article at least partially encloses a hollow space.

18. A method of programming a shape memory polymer article comprising

(i) heating to a temperature that is above the transition temperature of at least one of said shape memory polymer article's soft segments, but below the decomposition temperature of said shape memory polymer article,

(ii) forming said shape memory polymer article into an arbitrary shape, and

(iii) fixing said shape memory polymer article in the shape of step (ii) until the temperature has been reduced below said transition temperature,

wherein said shape memory polymer article is a shape memory polymer article according to any of items 15 to 17.

19. The shape memory polymer article according to any of items 15 to 17, wherein said shape memory polymer article has at least one shape in memory.

20. The shape memory polymer article according to item 19, wherein said shape memory polymer article is produced by the method of item 18.

21. Use of the shape memory polymer article according to any of items 15 to 17, 19 or 20.

The term "segment" according to the invention means that the oligomeric composition and/or the thermoplastic polymer include at least one oligomeric block, that can act as a soft segment and thereby enables a shape memory effect after the crosslinking process. Preferably such oligomeric blocks have a mean molecular weight of from approximately 1,000 g/mol to approximately 25,000 g/mol, in particular of from approximately 1,500 g/mol to approximately 18,000 g/mol.

As far as the present application refers to low molecular weight compounds, segments, components etc. the present invention refers to a mean molecular weight of 1000 g/mol or less, in embodiments 500 g/mol or less, such as from 100 g/mol to 400 g/mol, or from 150 g/mol to 300 g/mol. When the present invention refers to oligomers or oligomeric segments, compounds, components etc. the present invention refers to a mean molecular weight as defined above in paragraph [0016], and in embodiments to mean molecular weights of from 2000 g/ mol to 10000 g/mol. All mean molecular weights refer, unless otherwise stated, to number average values as obtained by SEC (GPC) described later.

The covalently crosslinkable oligomeric composition of the invention preferably includes at least one crosslinkable oligomeric compound, that is substituted by at least two crosslinkable groups, and preferably is terminally ($\alpha,\omega$) substituted by such crosslinkable groups, as is in more detail described in the following.

The at least one crosslinkable oligomeric compound of the invention preferably can be obtained by terminal functionalization of oligomeric polyols, and particularly preferred said oligomeric compounds are represented by the following formula **(I):**

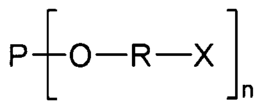

**(I),**

wherein

P represents an oligomeric segment, in particular a radical originating from an oligomeric polyol,
R represents an organic linking group, preferably of low molecular weight, or just a single bond,
X represents a crosslinkable group, preferably an acrylate group, and
n is an integer of at least 2, in particular from 2 to 6, and particularly preferred 2, 3, or 4.

Organic linking groups of the invention can be oligomeric or of low molecular weight. Low molecular weight organic linking groups preferably have a molecular weight of less than approximately 1,000, in particular less than approximately 500, and particularly preferred less than approximately 300. They are understood to be organic radicals, that preferably are aliphatic, can be substituted or unsubstituted, and can include organic groups such as ether groups, acyl groups, ester groups, carbonyl groups, amide groups, carboxylic acid groups, urethane groups, unsaturated groups, amino groups, and the like.

R preferably is an aliphatic di-radical with a molecular weight of less then approximately 400 g/mol, in particular less than approximately 200 g/mol. Although not preferred, R can also represent a chemical bond, so that the crosslinkable group X (e.g., an acrylate group), is directly bond to the oligomeric segment via an oxygen atom.

Examples of preferred oligomeric compounds of the invention are the macro-polyacrylates described in international publication WO 2007/096708, the disclosure of which is enclosed herein by reference.

In a particularly preferred embodiment of the invention, the group -R-X represents the following radical:

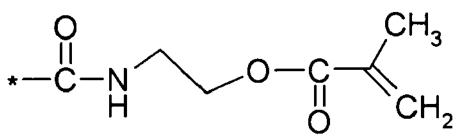

Said oligomeric compounds can preferably be obtained by an appropriate isocyanate, that is reacted with a polyol, wherein in the case of the above formula (e.g., 2-methacryloyloxyethyl isocyanate) is used, a compound that is commercially available (e.g., by Showa Denko as Karenz MOI®). Alternative oligomers can ebe obtained by a two step reaction, wherein at first a diisocyanate and an oligomeric polyol are reacted to obtain an oligomeric polyisocyanate, that thereafter is modified by a hydroxy-substituted compound with a crosslinkable group, for example, a hydroxy acrylate,

to obtain the crosslinkable oligomeric compounds that can advantageously be used for the invention.

The diisocyanates used in the first step of the aforementioned two step reaction may, but preferably do not include a crosslinkable group. Particularly preferred diisocyanates to be used therein are low molecular weight compounds such as hexamethylene diisocyanate, trimethyl hexamethylene diisocyanate, tolylene diisocyanate, isophorone diisocyanate and lysine diisocyanate, tolylene diisocyanate, 4,4'-diphenylmethane diisocyanate, xylylene diisocyanate, 4,4'-methylenebis(cyclohexylisocyanate), methylcyclohexane2,4-diisocyanate, methylcyclohexane-2,6-diisocyanate, 1,3-(isocyanatemethyl) cyclohexane, and isophorone diisocyanate. The diisocyanate compounds may be used alone or in combination as a mixture of two or more of them.

For medical applications, polyisocyanates such as hexamethylene diisocyanate, trimethyl hexamethylene diisocyanate, isophorone diisocyanate and lysine diisocyanate are most preferred.

It is also possible to use diisocyanate prepolymers whose molecular weight is greater than approximately 500 g/mol, and in particular up to approximately 3,000 g/mol. These polyurethane prepolymers are prepared via known reactions of the abovementioned diisocyanates with low-molecular weight diols or macrodiols (e.g., with oligoether diols, oligoester diols or oligocarbonate diols with MW of from approximately 500 to approximately 3,000 g/mol).

The crosslinkable group of the invention can be reacted by known methods to give covalent links (crosslinks) between separate molecules within the moldable composition of the invention. Preferably the crosslinkable group is selected from organic groups including at least one substituted or unsubstituted ethenylene group (-CH=CH-), in particular vinyl groups or acrylate groups, and their crosslinking is promoted thermally, by ultra violet light (UV), or by a combination of thermal and UV energy. An acrylate group of the invention can be substituted or unsubstituted; suitable substituents in α- and/or β-position of the carboxylic acid group are selected from hydrogen atoms and usual organic radicals, in particular from hydrogen atoms and alkyl groups with less than 7 carbon atoms. Particularly preferred are unsubstituted acrylate groups (only hydrogen atoms as substituents) and α-methylacrylate groups.

The oligomeric polyol of the invention that can be modified as described above to obtain the crosslinkable oligomeric compounds of the invention, preferably is a di-, tri-, tetra-, penta- or hexahydroxy compound, for which it is particularly preferred, if each of the hydroxy groups is located at the end of an oligomeric polymer block, whereinin the case of a diol only one block may be present, and otherwise multiple blocks are present (e.g., 2, 3, 4, 5, 6, and more blocks), that may be linked to a common central molecule (star shape), or that are linked to a common chain (comb shape), or a combination thereof. Preferably the polyol of the invention is an oligomeric diol, triol or tetrol, in particular a α,ω-dihydroxy substituted oligomeric compound, as is in more detail described below.

In a preferred embodiment of the invention, the following polyols can be used: polyester polyols, polyether polyols, polycarbonate polyols, polyester-polyether polyols, polycarbonate-polyester polyols, and polycarbonate-polyether polyols, wherein the polymers can be obtained by known synthetic procedures and can be homopolymers, copolymers and/or block copolymers. Such polyols preferably are oligomeric with a mean molecular weight of from approximately 1,000 g/mol to approximately 20,000 g/mol, in particular from approximately 2,000 g/mol to approximately 10,000 g/mol.

The polyester polyols preferably are synthesized by ring opening polymerization of cyclic lactones, by polycondensation of polycarboxylic acid or carboxylic acid derivatives with polyhydroxy compounds, or by polycondensation of hydroxycarboxylic acids or polyhydroxy carboxylic acids.

Preferred examples of polyester polyols include poly(ε-caprolactone) polyols (PCL); poly(ω-pentadecalactone) polyols (PPDL); hydroxy terminated polyesters obtainable from dicarboxylic acids or dicarboxylic acid esters and polyols, such as poly(1,6-hexamethylene adipate) polyols, poly(1,6-hexamethylene sebacate) polyols or poly(1,10-decamethylene sebacate) polyols; poly(ε-caprolactone-co-glycolide) polyols; poly(ε-caprolactone-co-lactide) polyols; poly(ε-caprolactone-co-glycolide-co-lactide) polyols; poly(lactide-co-glycolide) polyols; poly(ε-caprolactone-co-ω-pentadecalactone) polyols; poly(lactide)-poly(ε-caprolactone)-poly(lactide) ABA type block copolymer polyols; poly(lactide-co-glycolide)-poly(ε-caprolactone)-poly(lactide-co-glycolide) A/A'-B-A/A' type block copolymer polyols; and poly(ε-caprolactone)-poly(ω-pentadecalactone)-poly(ε-caprolactone) ABA type block copolymer polyols.

Lactide units that may be included in the polyols preferably are L,L- or D,L-dilactide units, and particularly preferred are L,L-dilactide units. The dilactide and diglycolide units that may be included in the polyols preferably are obtained by ring opening polymerization of the corresponding dilactide and diglycolide rings. In polyols of formula (**II**) that are copolymers and include glycolic acid units, such monomeric units are preferably present in an amount of approximately 40 weight-% or less, in particular from approximately 0.5 to approximately 35 weight-%, with respect to all monomers present in the polyol.

The polyester polyols preferably are oligomers with a low-molecular weight polyol in the middle of the polymer chains, polyester blocks of approximately the same length bond to each hydroxy group of said polyol, and with terminal hydroxy groups. The polyester polyols can preferably be obtained by ring-opening polymerization of the appropriate lactone in the presence of a low-molecular weight polyol that acts as the polymerization initiator. Said low-molecular weight polyol preferably has a molecular weight of less than approximately 500, in particular less than approximately 200 g/mol. Examples for preferred low-molecular weight polyols of the invention are substituted or unsubstituted aliphatic

polyols, in particular alkylene diols with 2 to 10 carbon atoms like ethylene glycol, diethylene glycol, n-butane-1,4-diol, n-octane-1,8-diol, n-decane-1,10-diol, and 2,2-bis-(hydroxymethyl)-propionic acid (HMPA-diol), or the polyols glycerol, trimethylolethane (2-hydroxymethyl-2-methyl-1,3-propandiol), trimethylolpropane (2-ethyl-2-hydroxymethyl-1,3-propandiol), or pentaerythrite.

Preferred examples of polyether polyols are polyethylene glycol (PEG), polypropylene glycol (PPG), poly-tetrahydrofurane (Poly-THF, pTHF), and block copolymers from PEG and PPG.

Preferred examples of polyester-polyether polyols are **ABA** block copolymer polyols with terminal hydroxy groups, wherein "**A**" means poly(ε-caprolactone), poly(ω-pentadecalactone), poly(lactide), poly(glycolide), poly(e-caprolactone-co-glycolide), poly(ε-caprolactone-co-lactide), poly(lactide-co-glycolide), poly(ε-caprolactone-co-pentadecalactone), poly(lactide-co-glycolide-co-caprolactone), and "**B**" means poly(ethylene glycol), polypropylene glycol, poly-tetrahydrofurane, or block copolymers from PEG and PPG.

Preferred examples of polycarbonate polyols (PC) include aliphatic polycarbonate diols (e.g., such Desmophen® compounds from Bayer) and cycloaliphatic polycarbonate diols.

A preferred example of polycarbonate-ester polyols include aliphatic polycarbonate diols (e.g., Desmophen® from Bayer), extended by polycondensation with dicarboxylic acid or dicarboxylic acid derivatives, such as sebacinic acid dibutylester.

Examples of crosslinkable oligomeric compounds that are particularly preferred to be included in the oligomeric composition of the invention include:

PCL(DEG)-2k UDM (**I-1**),

PCL(butan diol)-4k UDM **(I-2),**

PCL(butan diol)-10k UDM (**I-3**),

PCL(pentaerythrite)-16k UTM **(I-4),** and

PCL(HMPA diol)-5k UDM **(I-5),**
wherein 2k, 4k, 5k, 10k and 16k mean a total mean molecular weight of approximately 2,000, 4,000, 5,000, 10,000, and 16,000 g/mol, respectively, and wherein the low-molecular weight polyol used to initialize the polymerization reaction leading to the urethane dimethacrylates (UDM) was diethylene glycol (DEG), 1,4-butan diol (butan diol), and 2,2-bis-(hydroxymethyl)-propionic acid (HMPA-diol) respectively; and for urethane tetramethacrylates (UTM) was pentaerythrite;

PLGA(85/15; butan diol)-5k UDM **(I-6),**
a poly(lactide-co-glycolide) UDM with approximately 85 weight-% lactide acid units and
approximately 15 weight-% glycolic acid units, 1,4-butane diol as low-molecular weight diol in the middle of the molecule, and a total molecular weight of approximately 5,000;

PCLGA(90/10; butan diol)-5k UDM **(I-7),**
a poly(ε-caprolactone-co-glycolide) UDM with approximately 90 weight-% £-caprolactone units and approximately 10 weight-% glycolic acid units, 1,4-butane diol as low-molecular weight diol in the middle of the molecule, and a total molecular weight of approximately 5,000;

P-CUGA/LA(10/34/56; butan diol)-5k UDM **(I-8),** and

P-CUGA/LA(10/34/56; pentaerythrite)-16k UTM **(I-9),**
a poly(ε-caprolactone-co-glycolide-co-lactide) UDM or UTM respectively, with approximately 10 weight-% ε-caprolactone units, approximately 34 weight-% glycolic acid units, and approximately 56 weight-% lactide acid units; 1,4-butane diol or pentaerythrite respectively as low-molecular weight polyol in the middle of the molecule, and a total molecular weight of approximately 5,000 or 16,000 g/mol respectively;

pTHF-2k UDM **(I-10),**
an UDM from a poly-tetrahydrofurane diol available from BASF with a molecular weight of approximately 2,000 g/mol;

PLGA(85/15)-PEG400-5k UDM (**I-11**), and

PLGA(85/15)-PEG600-5k UDM **(I-12),**

poly(lactide-co-glycolide)-poly(ethylene glycol)-poly(lactide-co-glycolide) UDMs with approximately 85 weight-% lactide acid units and approximately 15 weight-% glycolic acid units, a molecular weight of the poly(ethylene glycol) block of approximately 400 g/mol or 600 g/mol respectively, and a total molecular weight of approximately 5,000 g/mol; and

PC-2k UDM **(I-13),**
an UDM obtainable by dimethacrylation of Desmophen® C 2200 from Bayer, a linear aliphatic polycarbonate diol with terminal hydroxy groups and a molecular weight of approximately 2,000 g/mol.

The thermoplastic polymer of the invention preferably has a mean molecular weight of from approximately 20,000 g/mol to approximately 400,000 g/mol, in particular from approximately 20,000 g/mol to approximately 200,000 g/mol, and particularly preferred from approximately 30,000 g/mol to approximately 80,000 g/mol. Depending on its molecular structure, in particular depending on the polymeric segments of the thermoplastic polymer of the invention, it can, but need not itself have shape memory properties.

The thermoplastic polymer of the invention can itself have crosslinkable groups, but preferably does not chemically react during the crosslinking step and therefore preferably is essentially not covalently bond to the three dimensional covalent network structure that is formed by the crosslinking process of the invention.

The thermoplastic polymer of the invention preferably is essentially linear, what means in the context of the invention, that it consists predominantly of a linear chain and is only crosslinked two-dimensionally or three-dimensionally to a small extent, and in particular is essentially not crosslinked. The degree of crosslinking of the thermoplastic polymer of the invention should be low enough, that the moldable composition can be processed by conventional methods like extrusion or injection molding.

The thermoplastic polymer of the invention can be selected from known thermoplastic polymers, which include the natural and synthetic polymers described below.

Examples of thermoplastic polymers that are preferred for the composition of the invention are described in the following.
Linear polyesters of poly(ε-caprolactone) (PCL), e.g.

PCL-50k **(T-1**), and

PCL-80k **(T-2**),
with a mean molecular weight of approximately 50,000 g/mol and 80,000 g/mol, respectively. PCL-50k and PCL-80k are commercially available from Solvay as CAPA® 6500 and 6800, respectively;
copolymers including PCL, in particular with trimethylene carbonate, e.g.

PCLTMC(90/10; butane diol)-60k **(T-3)**,
a random copolymer with a mean molecular weight of approximately 60,000 g/mol of ε-caprolactone (approximately 90 weight-%) and trimethylene carbonate (approximately 10 weight-%), wherein the low-molecular weight diol used to initialize the polymerization is 1,4-butane diol;
copolymers including PCL, in particular with lactic acid and/or glycolic acid, e.g.

P-CUGA/LA(10/34/56; tetrol)-20k tetrol **(T-4)**,
a random copolymer with a mean molecular weight of approximately 20,000 g/mol of ε-caprolactone (approximately 10 weight-%), glycolic acid (approximately 34 weight-%), and lactide acid (approximately 56 weight-%), wherein the low-molecular weight polyol used to initialize the polymerization is pentaerythrite;

P-CULA(15/85; butan diol)-80k diol **(T-5),**
a random copolymer with a mean molecular weight of approximately 80,000 g/mol of ε-caprolactone (approximately 15 weight-%), and lactide acid (approximately 85 weight-%),
wherein the low-molecular weight diol used to initialize the polymerization is 1,4-butandiol; and

P-CUGA(90/10; butan diol)-50k diol **(T-6)**,
a random copolymer with a mean molecular weight of approximately 50,000 g/mol of ε-caprolactone (approximately 90 weight-%), and glycolic acid (approximately 10 weight-%),
wherein the low-molecular weight diol used to initialize the polymerization is 1,4-butandiol.

Further preferred thermoplastic polymers of the invention include polyurethane elastomers, in particular the polycarbonate based materials like those commercially available as Carbothanes® from Lubrizol Advanced Materials,

Inc. (e.g., Carbothane® PC-3555D).

The moldable composition of the invention preferably includes one or more of the thermoplasts of the invention in a total amount of at least approximately 0.2 weight-%, in particular from approximately 1 weight-% to approximately 40 weight-%, and particularly preferred from approximately 3 weight-% to approximately 35 weight-%, preferably includes one or more crosslinkable oligomeric compounds in a total amount of at least approximately 40 weight-%, in particular from approximately 50 weight-% to approximately 90 weight-%, and particularly preferred from approximately 65 weight-% to approximately 97 weight-%, and the composition may include polymeric and/or oligomeric and/or low-molecular weight ingredients, that are known to advantageously influence the desired properties of polymers, or that are necessary for a desired application. The above weight-% values are related to the total amount of non-volatile ingredients in the moldable composition of the invention. Additionally, blends of the thermoplastic polymer of the invention with other polymers or with a different thermoplastic polymer of the invention may be included in the moldable composition of the invention. Such additional polymers may be natural or synthetic. Polymers useful for the invention, including oligomers, can be linear or branched and may include side chains or any kind of dendritic structural elements. Examples of suitable additional polymers are described below.

To initiate the crosslinking reaction, the moldable composition of the invention preferably includes crosslinking initiators, in particular heat (chemical) and/or light (photo) sensitive initiators. Preferably, the initiators are used in an amount of approximately 0.1 to approximately 5 weight-%, in particular from approximately 0.1 to approximately 1.5 weight-%, and particularly preferred from approximately 0.1 to approximately 0.5 weight-%. In a preferred embodiment of the invention, photoinitiators are used, in particular Esacure® KIP 150 (oligo-[2-hydroxy-2-methyl-1-[4-(1-methylvinyl) phenyl] propanone) from Lamberti; a 1 : 1 mixture of D,L-champhorquinone (2,3-bomandion) and ethyl-2-dimethylaminobenzoate; Lucirin® TPO; Lucirin® TPO-L; Darocur® 1173; Irgacure® 184; Irgacure® 500; Esacure® KIP 100 F; and benzophenone.

In a preferred embodiment of the invention, the moldable composition includes at least one thermal polymerization inhibitor, such as 4-methoxyphenol, in an amount to reliably suppress thermal polymerization during the compounding and the extrusion processes.

The thermoplastic polymer and/or the crosslinkable oligomeric compound of the invention may include polymeric blocks, that can be from natural or synthetic origin. Examples of suitable polymer blocks are described below.

Representative natural polymer blocks or polymers include proteins such as zein, modified zein, casein, gelatin, gluten, serum albumin, and collagen, and polysaccharides such as alginate, celluloses, dextrans, pullulane, and polyhyaluronic acid, as well as chitin, poly(3-hydroxyalkanoate)s, especially poly(β-hydroxybutyrate), poly(3-hydroxyoctanoate) and poly(3-hydroxyfatty acids).

Representative natural biodegradable polymer blocks or polymers include polysaccharides such as alginate, dextran, cellulose, collagen, and chemical derivatives thereof (substitutions, additions of chemical groups, for example, alkyl, alkylene, hydroxylations, oxidations, and other modifications routinely made by those skilled in the art), and proteins such as albumin, zein and copolymers and blends thereof, alone or in combination with synthetic polymers.

Representative synthetic polymer blocks or polymers include polyphosphazenes, poly(vinyl alcohols), polyamides, polyester amides, poly(amino acid)s, synthetic poly(amino acids), polyanhydrides, polycarbonates, polyacrylates, polyalkylenes, polyacrylamides, polyalkylene glycols, polyalkylene oxides, polyalkylene terephthalates, polyortho esters, polyvinyl ethers, polyvinyl esters, polyvinyl halides, polyvinylpyrrolidone, polyesters, polylactides, polyglycolides, polysiloxanes, polyurethanes and copolymers thereof.

Examples of suitable polyacrylates include poly(methyl methacrylate), poly(ethyl methacrylate), poly(butyl methacrylate), poly(isobutyl methacrylate), poly(hexyl methacrylate), poly(isodecyl methacrylate), poly(1 auryl methacrylate), poly(phenyl methacrylate), poly(methyl acrylate), poly(isopropyl acrylate), poly(isobutyl acrylate) and poly(octadecyl acrylate).

Synthetically modified natural polymers include cellulose derivatives such as alkyl celluloses, hydroxyalkyl celluloses, cellulose ethers, cellulose esters, nitrocelluloses, and chitosan. Examples of suitable cellulose derivatives include methyl cellulose, ethyl cellulose, hydroxypropyl cellulose, hydroxypropyl methyl cellulose, hydroxybutyl methyl cellulose, cellulose acetate, cellulose propionate, cellulose acetate butyrate, cellulose acetate phthalate, carboxymethyl cellulose, cellulose triacetate and cellulose sulfate sodium salt. These are collectively referred to herein as "celluloses."

The thermoplastic polymer, the crosslinkable oligomeric composition, and the SMP articles of the invention can be biodegradable or non-biodegradable, although biodegradable polymer compositions and articles thereof often are preferred for *in vivo* medical applications. In general, these materials degrade by hydrolysis, by exposure to water or enzymes under physiological conditions, by surface erosion, by bulk erosion, or a combination thereof. Biodegradability can be achieved, if the polymer segments themselves include labile bonds, or if segments are linked via a biodegradable linkage, such as ester-, amide-, anhydride-, carbonate-, or orthoester linkages, preferably urethane and ester linkages.

Even during their degradation, the devices made from the SMP networks of the invention are mechanically stable over a long time. Thus, the supporting function of a medical device like a stent is no longer needed at the time its mechanical stability is impaired by the biodegradation.

As used herein, the term "biodegradable" refers to materials that are bioresorbable and/or degrade and/or

break down by mechanical degradation upon interaction with a physiological environment into components that are metabolizable or excretable, over a period of time from minutes to five years, preferably less than three years, in particular less than one year, while maintaining the requisite structural integrity.

As used herein in reference to polymers, the term "degrade" refers to cleavage of the polymer chain, such that the molecular weight stays approximately constant at the oligomer level and particles of polymer remain following degradation. The term "completely degrade" refers to cleavage of the polymer at the molecular level such that there is essentially complete mass loss. The term "degrade" as used herein includes "completely degrade" unless otherwise indicated.

Biodegradable segments that are preferred in the context of the invention are, for example, described in U.S. Patent No. 6,160,084, the disclosure of which is included herein by reference.

Representative synthetic degradable polymer segments include polyhydroxy acids, such as polylactides, polyglycolides and copolymers thereof; poly(ethylene terephthalate); polyanhydrides, poly(hydroxybutyric acid); poly(hydroxyvaleric acid); poly[lactide-co-(ε-caprolactone)]; poly[glycolide-co-(ε-caprolactone)]; polycarbonates, poly(pseudo amino acids); poly(aminoacids); poly(hydroxyalkanoate)s; polyanhydrides; polyortho esters; and blends and copolymers thereof. Polymers containing labile bonds, such as polyanhydrides and polyesters, are well known for their hydrolytic reactivity. Their hydrolytic degradation rates can generally be altered by simple changes in the polymer backbone and their sequence structure.

Non-biodegradable SMP networks, if used for medical applications, preferably do not include aromatic groups, other than those present in naturally occurring amino acids.

Various polymers, such as polyacetylene and polypyrrole, are conducting polymers. These materials are particularly preferred for uses in which electrical conductance is important. Examples of these uses include tissue engineering and any biomedical application where cell growth is to be stimulated. These materials may find particular utility in the field of computer science, as they are able to absorb heat without increasing in temperature better than SMAs. Conducting shape memory polymers are useful in the field of tissue engineering to stimulate the growth of tissue, for example nerve tissue.

Examples of non-biodegradable synthetic polymer segments include ethylene vinyl acetate, poly(meth)acrylic acid, polyamides, polyethylene, polypropylene, polystyrene, polyvinyl chloride, polyvinylphenol, and copolymers and mixtures thereof.

The polymers can be obtained from commercial sources or can be synthesized from monomers obtained from commercial sources, using standard techniques.

The problem to be solved by the invention is caused by the fact that the precursor(s) of shape memory network polymers that have at the same time very good shape memory properties, high elasticity and high mechanical strength, can not be extruded or injection molded in the conventional way. When trying to extrude such materials, they form no permanent film when leaving the extruder, so that the intended three dimensional form collapses or breaks. In addition, the cooled article is very brittle and is difficult to handle until it is stabilized by quantitative crosslinking. The brittleness is the major problem for the injection molding, so that one usually fails to get the parts unbrokenly out of the mold. Using known polymer additives like plasticizers, viscosifiing agents, fillers and the like, did not result in a satisfactory processability or had an adverse effect on the afore mentioned properties of the shape memory polymers.

The moldable composition of the invention can be prepared by known methods. Usually it is prepared by mixing the ingredients in the melt, casting the melt into a thin film, and thereafter breaking the film into small particles with an appropriate mill. To avoid aggregation effects in the extruder, the so prepared granulate is sieved to get particles with a mean diameter of from about approximately 2 to approximately 3 mm, that essentially do not include dust.

It has been found, that the melting point of the thermoplast and of the crosslinkable oligomers of the invention should be in a similar range to obtain molds of a high homogeneity.

In a particularly preferred embodiment of the invention, the thermoplast and the at least one oligomeric compound have in common at least one monomer. A moldable composition according to this embodiment forms a very homogeneous melt, that includes little or no solid parts.

Moldable compositions of higher viscosity are preferred for extrusion molding to increase the stability of the molten material, whereas a lower viscosity and higher temperatures are preferred for injection molding. For injection molding, it is particularly important that the material is not brittle, to be able to separate the material from the mould without break, even if filigree structures are molded.

It has been found that the moldable composition of the invention can conveniently be processed using known methods to form thermoplastic polymers into shape, using known machines and tools;it can be blow molded, rotationally molded, thermoformed, vacuum formed, laminated, compression molded, transfer molded, casted, extrusion molded (extruded) or injection molded in any desired shape to obtain three dimensional devices of high quality, that can be crosslinked to a high degree and thereby give three dimensional devices with superior mechanical and shape memory properties, with an exact form, reproducible dimensions and with a high mechanical long-term stability. In addition different processing methods and recasting can be combined, so that, for example, a tube or a filament is extruded in

the first step, that thereafter is calibrated to a defined diameter and cutted into an appropriate length.

The method of the invention is particularly preferred for all processing methods,
wherein the non-quantitatively crosslinked material needs to maintain its dimensional stability when being hot, and/or wherein the non-quantitatively crosslinked material needs a particular elasticity.

A particular advantage of the moldable compositions of the invention is the optimal compromise of fluidity and mechanical stability when processing it, and its elasticity and flexibility even before crosslinking. Known compositions suitable for shape memory polymer networks usually have a sufficient fluidity to be processed at high temperatures using common methods, but show an unsatisfactory mechanical stability during the processing and often are brittle before the crosslinking. Therefore, it is difficult to produce a three-dimensional device from known crosslinkable compositions and to exactly maintain its form and dimensions from the moment of processing until it is crosslinked to fix its permanent form.

The moldable composition of the invention has a sufficient mechanical stability and suitable high viscosity at usual processing temperatures, so that a tube extruded therefrom maintains its original circular cross-section until it is crosslinked. Tubes from known compositions, on the other hand, tend to deform before their permanent form is fixed. Despite their higher mechanical stability at processing temperatures, the moldable compositions of the invention have the additional advantage to be less brittle than the known ones, so that it is easier to handle the processed three dimensional SMP articles of the invention without breaking them. This is particularly advantageous to separate a molded product after injection molding, from its mold.

Crosslinkable biodegradable compositions usually are particularly brittle, in particular those with a fast biodegradation rate, so that the method of the present invention is particularly useful for the production of biodegradable SMP articles.

Although the tools for processing of moldable compositions are produced with extraordinary care, it can't always be avoided, that they have irregularities such as small scratches, that may be impressed to the produced three dimensional devices. Although very small faults that are thereby produced may not affect the function of the devices, their value might nevertheless be decreased, if the fault is visible. Much worse, such faults can weaken the devices to such an extend, that their function is no longer assured and the marred devices have to be discarded. It has been found, that when using the molding method of the invention such faults are less likely to occur.

In some cases it is also possible to select the crosslinkable oligomeric compound of the invention so that the molding and crosslinking is successful even without the thermoplast. For this embodiment of the invention, the suitable combination of an appropriate oligomer and appropriate processing temperatures has to be determined in a way to get an appropriate viscosity of the molded composition to form a stable film in the given process, and/or to have a sufficient elasticity before quantitative crosslinking.

In a preferred embodiment of the invention, the moldable composition is processed with an extruder, although it should be understood that the invention is not restricted to this embodiment. An extruder is well known in the art for the shaping of thermoplastic polymers. It usually incldues of a barrel with a feeding system for a polymeric granulate, one or more transporting screws, that usually are driven electrically into rotational movement, and a nozzle.

The barrel and screw are usually zoned into between for example 3 and 7 sections which are individually heated and cooled depending on the material and process parameters. The nozzle (die) channels the polymer melt from the front of the screw to form the basic shape of the desired product. Usually the product then passes a calibration unit, that stabilizes the form of the output whilst the polymer is being cooled. The haul-off provides the dragging force to overcome the frictional forces in the calibrators and to pull the profile through the calibrators, and at the end a saw or preferably a cutter to avoid dust cuts the profile to the desired length. Additional operations may be performed in the line or at the end of the line depending on the operation.

The extruder screw has several basic functions. It brings the feedstock into the extruder and moves the material along the screw whilst at the same time compressing it and removing volatiles. It softens the melt by heating it (both from internally generated shear forces and externally applied heat), and mixes the melt and thereby produces a homogeneous melt without impurities. In addition the screw has to apply a constant pressure (free of pulsation) required to force the material through the nozzle. These functions, at least for a single screw extruder, are generally achieved at different sections of the extrusion screw as the material progresses along the barrel.

The extruder barrel (cylinder), screw and nozzle are of high strength steels and are protected from wear and corrosion by a variety of hardening and coating treatments such as nitriding and hard chroming. Preferably, a medical grade extruder is used for the invention, wherein abrasion is minimized and it is assured by technical means, that no lubricant, in particular no silicon containing lubricant, can contaminate the mold.

In a preferred embodiment of the invention, a twin-screw extruder, in particular with corotating screws, is used to assure a constant flow of material and to minimize the occurrence of longitudinal groovings and visible particles within the extruded material.

In another preferred embodiment of the invention, a filament, in particular a plastic filament made for example of low density polyethylene (LDPE) with a diameter corresponding to the intended inner cross section of the intended

tube was passed through the extruder nozzle together with the extruded material, so that the tube is coated on the filament and the feed rate of the filament determines the extrusion rate of the tube. Tubes of high quality, in particular with very uniform and precise dimensions can be obtained using this embodiment, and it was possible to process molds with a low viscosity, and even to extrude tubes with the molding and crosslinking method of the invention, but without using a thermoplast. After extrusion and crosslinking, the tubes can be separated easily from the supporting filament.

Therefore, molds with a lower viscosity could be used in configuration B and nevertheless tubes of a high quality were obtained.

The moldable compositions of the invention can also be shaped by other methods known to those of skill in the art for shaping solid objects, for example, laser ablation, micromachining, use of a hot wire, and by CAD/CAM (computer aided design/computer aided manufacture) processes. These processes are also preferred for shaping the SMP articles of the invention.

The crosslinking process of the invention is performed after the molding process (forming into shape), and can be done by known methods suitable for the crosslinkable groups present in the moldable composition of the invention. Preferably, the crosslinking is promoted thermally, by ultra violet light (UV), or by a combination of thermal and UV energy to obtain three dimensionally crosslinked polymer networks.

The crosslinking reaction is most efficient, if performed in the melt and under exclusion of oxygen, and for the photocrosslinking with UV energy the materials of the invention are irradiated with actinic radiation having a wavelength of preferably from approximately 320 to 500 nm. The reaction conditions can be optimized by a person skilled in the art by usual experimental techniques.

Although the crosslinking is usually done in the melt, it has been found, that the moldable composition of the invention can also be crosslinked at temperatures that are low enough for the polymer to be sufficiently mechanically stable under the applied temperature so that hollow three dimensional articles made therefrom can be crosslinked successfully.

During the crosslinking step, the moldable composition of the invention preferably is almost free from solvents, but the crosslinking can also be performed in the presence of one or more solvent(s). In this case, the solvent(s) preferably is(are) removed from the formed gel in a subsequent step. After the crosslinking step, and where necessary, the removal of the solvent(s) the SMP article of the invention is obtained in its permanent form.

The crosslinking of the invention preferably is performed to a certain degree during the forming (molding) process (e.g., directly after the material leaves the extruder, and/or during the calibration). This in-line crosslinking is also called pre-crosslinking in the context of the invention. As the crosslinking time at this stage is usually too short for a quantitative reaction, a further quantitative crosslinking step (post-crosslinking) usually has to be done after the forming process. Although not quantitative, the pre-crosslinking process mechanically stabilizes the material and provides a better elasticity thereto.

The SMP articles of the invention are able to store at least one form (shape) in memory so that they can be programmed into a stable temporary form and switched back, by a stimulus like a temperature increase, to their memorized (permanent) form. The permanent form is defined therein by the two- and in particular three-dimensionally crosslinked network structure. The at least one temporary form is defined by polymer segments, that reversibly stabilize said form as known in the art, so that the permanent form is only recovered after application of an appropriate stimulus.

Stimuli causing shape change preferably can be temperature, ionic change, pH, light, electric field, magnetic field or ultrasound. Particularly preferred is a temperature increase as stimulus.

When a SMP article of the invention is cooled below the melting point or glass transition temperature of at least one of its soft segments while the shape is deformed with respect to the permanent shape, that (temporary) shape is fixed. The original shape is recovered by heating the material above the melting point or glass transition temperature of the said segment but below the decomposition temperature of the article.

In another method for setting a temporary shape, the material is deformed at a temperature lower than the melting point or glass transition temperature of said soft segment, resulting in stress and strain being absorbed by the soft segment. When the material is heated above the melting point or glass transition temperature of said soft segment, but below the decomposition temperature of the article, the stresses and strains are relieved and the material returns to its original shape.

The shape memory polymer articles of the invention are preferably programmed in that they are in the following order i) heated to a temperature that is above the transition temperature of at least one of its soft segments, but below the decomposition temperature of the article, ii) formed into an arbitrary shape, and fixed in this shape until iii) the temperature has been reduced below said transition temperature.

A certain amount of energy needs to be transferred to the shape memory polymer in order to recover a memorized shape. For the thermal shape memory effect, the amount of energy required to fully recover a memorized shape depends on the heat capacity of the material. For light sensitive materials, however, the amount of energy depends on the dosage of irradiation. In a preferred embodiment of a thermal shape memory effect, the polymer has a sharp thermal transition, which is triggered based on the duration the material is exposed to a temperature greater than $T_{trans}$.

Other factors affecting the transition include the mass or size of the material, and the temperature and heat transfer coefficient of the medium or environment in contact with (and used to heat) the material. For example, the higher the temperature of the environment, the more quickly the memorized shape is recovered.

Several physical properties of SMPs other than the ability to memorize shape are significantly altered in response to external changes in temperature and stress, particularly at the melting point or glass transition temperature of the soft segment. These properties include the elastic modulus, hardness, flexibility, vapor permeability, damping, index of refraction, and dielectric constant. The elastic modulus (the ratio of the stress in a body to the corresponding strain) of an SMP can change by a factor of up to 200 when heated above the melting point or glass transition temperature of the soft segment. Also, the hardness of the material changes dramatically when the soft segment is at or above its melting point or glass transition temperature. When the material is heated to a temperature above the melting point or glass transition temperature of the soft segment, the damping ability can be up to five times higher than a conventional rubber product.

A particular advantage of the SMP articles of the invention is that they show little to no tendency of losing their mechanical stability, in either of their permanent or in their programmed form(s). This means, for example, that an implanted tubular device (a stent) will be stable and maintain its diameter over a long period of time and therefore hold open a blood vessel at a constant diameter. In other words, such an implanted device will show little to no recoil.

In a preferred embodiment of the present invention the shape memory polymer networks included in the SMP articles have a gel content of approximately 60% or higher, in particular of approximately 80% or higher, and especially preferred of approximately 90% and higher.

Complex and exactly reproducible shape changes, that offer a very high usability, and which should not be mistaken for simple shrinking or swelling effects, are only available if the SMP has high values for shape recovery and shape fixity. This is ensured by the SMP networks formed by the method of the invention, that can readily recover to their original molded shape following numerous thermal cycles, and that preferably have a shape recovery of approximately 50% or higher, in particular of approximately 80% or higher, and especially preferred of approximately 90% and higher, and a shape fixity of approximately 85% or higher, in particular of approximately 90% or higher, and especially preferred of approximately 95% and higher.

In a preferred embodiment of the invention, the degree of crystallinity of the polymer or segments thereof is between approximately 3% and approximately 80%, more preferably between approximately 3% and approximately 60%.

In another preferred embodiment of the invention, the shape memory polymer networks included in the SMP articles are able to store at least two forms (shapes) in memory(e.g., 2, 3, 4 or even more than 4 forms). Shape memory network polymers with two forms in memory are also called triple shape memory polymers. In the invention, the different temporary shapes, hence all shapes apart from the permanent shape defined by the covalent network, are stabilized by different polymer segments. Said segments preferably each are present at a ratio of at least approximately 5 weight-% (wt-%), and preferably of at least approximately 20 wt-%, with regard to the total mass of the polymer network of the invention in order to achieve a strong shape memory effect.

The different segments responsible for the possibility to store more than one form in memory can all be part of one crosslinked oligomer of the invention, provided that they include suitable segments.

Alternatively, at least two different crosslinkable oligomers can be blended in the moldable composition of the invention. After the crosslinking step, shape memory polymer networks with more than one form in memory can be obtained, if the segments provided by the different oligomers are suitably selected.

A further possibility is to use at least a thermoplastic polymer of the invention with a suitable segment, so that an interpenetrating network with more than one shape in memory is obtained, if the segments provided by the thermoplastic polymer and the crosslinked oligomers are suitably selected.

Said segments, that are suitable to obtain a shape memory polymer composition being able to hold more than one shape in memory, have to differ sufficiently in their response to a stimulus, so that their form change can be triggered selectively. For example, the composition can include in addition to the network structure that defines the permanent shape, a hard segment and at least one soft segment, wherein the $T_{trans}$ of the hard segment is between approximately -30° C and approximately 270° C, and is at least approximately 10° C, and preferably at least approximately 20° C, higher than the $T_{trans}$ of one of the soft segments, and the $T_{trans}$ of each subsequent soft segment is at least approximately 10° C, and preferably at least approximately 20° C, lower than the $T_{trans}$ of the preceding soft segment.

In another embodiment of the invention, at least two of said segments, that are suitable to obtain a shape memory polymer composition being able to hold more than one shape in memory, are responsive to different stimuli, so that their form change can be triggered independently by each of the stimuli. In this embodiment, one of the segments ("the first segment") may be responsive to temperature, ionic change, pH, light, electric field, magnetic field or ultrasound and another segment may be responsive to a stimulus taken from the same group, but being different to that of the first segment. In this embodiment, it is preferred if at least one of the segments is responsive to an increase in temperature.

The invention is also related to articles including a SMP network of the invention
wherein said articles include at least a part that has been formed by the molding method of the invention and that has

been molded and crosslinked according to the invention. In a preferred embodiment of the invention, such articles at least partially enclose a hollow space (an example of such an article is a tubular device like a stent).

Any of a variety of therapeutic, prophylactic and/or diagnostic agents can be incorporated within the polymer compositions of the invention, and articles made therefrom can also be provided with coatings that include such agents, so that the compositions and articles of the invention can locally or systemically deliver the incorporated agents following administration to a patient. Examples include: synthetic inorganic and organic compounds or molecules, proteins and peptides, polysaccharides and other sugars, lipids, and nucleic acid molecules having therapeutic, prophylactic or diagnostic activities. Nucleic acid molecules include genes, plasmid DNA, naked DNA, antisense molecules which bind to complementary DNA to inhibit transcription, ribozymes and ribozyme guide sequences. The agents to be incorporated can have a variety of biological activities, such as vasoactive agents, neuroactive agents, hormones, growth factors, cytokines, anaesthetics, steroids, anticoagulants, anti-inflammatories, immunomodulating agents, cytotoxic agents, prophylactic agents, antibiotics, antivirals, antisense, antigens, and antibodies. In some instances, the proteins may be antibodies or antigens which otherwise would have to be administered by injection to elicit an appropriate response. Proteins are defined as including approximately 100 amino acid residues or more; peptides are less than approximately 100 amino acid residues. Unless otherwise stated, the term protein refers to both proteins and peptides. Polysaccharides, such as heparin, can also be administered. Compounds with a wide range of molecular weight, for example, between approximately 10 and approximately 500,000 grams per mole, can be encapsulated.

Imaging agents which may be utilized for the articles of the invention include commercially available agents used in positron emission tomography (PET), computer assisted tomography (CAT), single photon emission computerized tomography, x-ray, fluoroscopy, magnetic resonance imaging (MRI), and ultrasound agents.

The polymer compositions of the invention, and articles made therefrom, can be used to prepare articles of manufacture for use in biomedical applications. For example, sutures, orthodontic materials, bone screws, nails, plates, catheters, tubes, films, stents, PFO devices, orthopedic braces, splints, tape for preparing casts, and scaffolds for tissue engineering, contact lenses, drug delivery devices, implants, and thermal indicators, can be prepared.

The polymer compositions of the invention, and articles made therefrom, can be formed into the shape of an implant which can be implanted within the body to serve a mechanical function. Examples of such implants include rods, pins, screws, plates and anatomical shapes.

The polymer compositions of the invention, and articles made therefrom, can be combined with fillers, reinforcement materials, radioimaging materials, excipients or other materials as needed for a particular implant application. Examples of fillers include calcium-sodium-metaphosphate which is described in U.S. Patent No. 5,108, 755, the disclosure of which is incorporated herein by reference, as well as barium sulfate. Those of skill in the art can readily determine a suitable amount of these materials to include in the compositions.

Examples of non-medical type applications for polymer compositions of the invention, and articles made therefrom, include items for which disposal is an issue, such as disposable diapers and packaging materials, self healing plastic parts(e.g., suitable in the automotive industry, switches, sensors, and locking systems). The materials of the invention can also facilitate the assembly or disassembly of devices(e.g., the fixation of glasses in spectacles or the opening or disintegration of a case for easy recycling of its components).

Certain articles of the invention are designed to hold their intended shape unless acted upon in a manner inconsistent with their normal use. For example, a car bumper will hold its intended shape unless it has been impacted. These articles are to be used in their intended shape and repaired, for example, by application of heat, once they are damaged.

Other articles of manufacture are designed to be used such that the first shape is intended for an initial use, and a second shape is intended for a subsequent use. Examples of these include biomedical devices which can form a second shape upon reaching at body temperature, or upon application of an extemal stimulus which heats the device above body temperature.

Still other articles of manufacture are designed to be used such that their shape changes in reaction to, or adjustment to, changes in temperature, such as thermosensors in medical devices.

As becomes clear from the broad variety of articles that can advantageously be prepared from the SMP network polymers of the invention, there is a wide range of applications and uses for such articles.

It will be apparent to those skilled in the art that various modifications and variations can be made in the present invention and specific examples provided herein without departing from the spirit or scope of the invention. Thus, it is intended that the present invention covers the modifications and variations of this invention that come within the scope of any claims and their equivalents.

The following examples are for illustrative purposes only and are not intended, nor should they be interpreted to, limit the scope of the invention.

## EXAMPLES

**Extrusion of Tubes (Stents)**

A composition including the oligomer and the polymer according to table 1 was prepared as a melt, that also included the inhibitor 4-methoxyphenol in an amount of 600 ppm with respect to the total weight of the oligomer in the mixture to avoid thermal crosslinking, 0,2 weight-% of the photoinitiator Esacure KIP 150 (oligo-[2-hydroxy-2-methyl-1-[4-(1-methylvinyl) phenyl]-propanone), and the amount of radio opaque barium sulfate as specified in table 1. The melt was casted as a thin plate, milled and sieved, to obtain particles with a mean diameter of approximately 2 to 3 mm.

**Table 1. Extruded Materials**

| Material | Oligomer | Polymer | Weight ratio Oligomer/Polymer (%) | BaSO4 (weight-%) |
|---|---|---|---|---|
| 1 | I-3 | T-2 | 75:25 | 0 |
| 2 | I-4 | T-2 | 75:25 | 0 |
| 3 | I-3 | T-2 | 75:25 | 10 |
| 4 | I-4 | T-2 | 75:25 | 10 |
| 5 | I-3 | T-2 | 85:15 | 0 |
| 6 | I-4 | T-2 | 85:15 | 0 |
| 7 | I-3 | T-2 | 65:35 | 0 |
| 8 | I-4 | T-2 | 65:35 | 0 |
| 9 | I-3 | T-2 | 65:35 | 10 |
| 10 | I-4 | T-2 | 65:35 | 10 |
| 11 | I-3 | T-2 | 95: 5 | 0 |
| 12 | I-4 | T-1 | 65:35 | 0 |
| 13 | I-3 | T-1 | 65:35 | 10 |
| 14 | I-3 | - | 100:0 | 0 |
| 15 | I-4 | - | 100:0 | 0 |
| 16 | I-4 | T-3 | 75:25 | 0 |
| 17 | I-9 | T-4 | 75:25 | 0 |
| 18 | I-12 | - | 100:0 | 0 |
| 19 | I-11 | T-5 | 75:25 | 0 |
| 20 | I-11 | T-6 | 75:25 | 0 |
| 21 | I-9 | T-5 | 75:25 | 0 |
| 22 | I-12 | T-5 | 75:25 | 0 |
| 23 | I-11 | T-5 | 88:12 | 0 |
| 24 | I-11 | T-5 | 80:20 | 0 |
| 25 | I-11 | T-5 | 75:25 | 0 |
| 26 | I-11 | T-6 | 88:12 | 0 |
| 27 | I-9 | T-5 | 88:12 | 0 |
| 28 | I-12 | T-5 | 88:12 | 0 |
| 29 | I-12 | T-5 | 75:25 | 0 |
| 30 | I-11 | T-5 | 90:10 | 0 |
| 31 | I-11 | T-5 | 95:5 | 0 |

**Characterization of the materials**

The molecular weights of the polymeric materials were determined by gel permeation chromatography (GPC) using standard procedures. THF was used as the eluent and polystyrene, Triple SEC as a standard. $M_n$ means the number-average molar mass and $M_w$ the weight-average molar mass. If not explicitly specified, then the molar mass (molecular weight) is given as $M_n$ value.

The thermal properties of the materials were evaluated by differential scanning calorimetry (DSC) with a Mettle Toledo DSC 822 equipment using 5 to 10 mg of material and heating between -100 to 150° C with a heating rate of 10 K / minute and a cooling rate of 10 K / minute. Two scans were recorded and the data were taken from the second heating scan. The peak related to a shape transition had a certain temperature range, that was analyzed by measuring the temperature, at which the transition begins (**Peak(1,2**) Tm, onset), the temperature at the maximum of the peak (**Peak(1,2) Tm, peak**), and the temperature at which the transition is completed (**Peak(1,2) Tm, end**). **Tm, onset** was obtained mathematically from the measurement at the point, at which the tangent through the inflection point at the low-temperature side of the peak subtends the straight line best fitted to be the baseline underlying the peak. In cases where no single inflection point could be indentified, but a region with an approximately constant gradient, a straight line through said region was used instead of the tangent. **Tm**, **end** is obtained accordingly at the high temperature side of the peak.

The gel content of polymer networks was determined after extraction at room temperature (room temperature as referred to herein refers to a temparatures of 20 to 25°C, typically 23 °C unless otherwise stated) in chloroform for 2 hours and drying the gels in vacuum until constant weight. The gel content was calculated according to the formula

$$\text{Gel Content (\%)} = 100 \times m_1 / m_2,$$

wherein $m_1$ is the weight of the insoluble part after extraction and drying, and $m_2$ is the weight before extraction.

The shape memory behavior was determined quantitatively by cyclic thermo mechanical measurements performed on a Zwick Z005 equipped with a thermo chamber. Strain recovery rate (Rr, %) and strain fixity rate (shape fixity, Rf, %) were determined in one cycle. The temperature gradient (dT/dt) was 1° C/minute).

Cyclic thermomechanical measurements at room temperature were done to determine the tensile strength, E-modulus and elongation at break values of the (non-extracted) polymer network films cut to DIN EN ISO 527-2 / 1 BB specifications. A Zwick Z005 tensile tester equipped with a thermo chamber at a speed of 10 mm/minute using a 1 kN force sensor (DIN EN ISO 527-2 / 1 BB 10) was used for this purpose.

Elastical and shape memory properties of selected materials after the quantitative crosslinking process are shown in table 2.

**Table 2. Elastic and Shape Memory Properties of Selected Materials**

| Material | $T_{tr}$, peak (°C) | E-modulus (MPa) | Elongation at break (%) | Tensile Strength (MPa) | Rf (%) | Rr (%) |
|---|---|---|---|---|---|---|
| **20** | 41 | 2750 | 217 | 51 | 99 | 87 |
| **21** | 40 | 1660 | 11 | 23 | 99 | 79 |
| **22** | 37 | 1700 | 212 | 30 | 99 | 72 |
| **23** | 40 | 2180 | 204 | 39 | 99 | 83 |

**Experimental Setup for the Extrusion**

A single screw extruder "Ehl" with a water cooled feeding zone (0) and 6 temperature controlled zones (1) to (6) was used, wherein zones (1) to (4) were zones, in this order, within the barrel (cylinder) surrounding the extruder screw between the feeding zone and the flange, zone (5) was the flange at the end of the cylinder and zone (6) was the nozzle itself that was mounted to the flange.

In configuration **A**, the opening (outlet) of the extruder nozzle was in the form of a ring with an outer open diameter of 8.6 mm and a centered inner open diameter of 7.9 mm, wherein the inner diameter was established by a mandrill of circular shape fixed in the nozzle and ending at the outlet of the nozzle, whereas in configuration **B**, a filament made of low density polyethylene (LDPE) with a diameter corresponding to the intended inner cross section of the tube was passed through the extruder nozzle together with the extruded material, so that the tube is coated on the filament and the feed rate of the filament determines the extrusion rate of the tube. The experiments were run in both configurations.

The following processing steps were performed in this order:

**I.** Feeding of the material into the extruder

**II.** Molding (within extruder)

**III.** Extrusion
Configuration **A**: a ring slit nozzle is used, wherein supporting nitrogen passes through the mandrill and through the tube, so that the tube is only supported mechanically after the nozzle by the nitrogen gas.
Configuration **B**: a nozzle with a passing-through filament is used, wherein a plastic filament (LDPE) uncoils from a roll, so that the tube is supported mechanically by the inner filament.

IV. (Pre) Crosslinking (in-line)
The extruded tube passes through a glass tube with a length of approximately 30 cm, that is flooded with nitrogen, wherein the glass tube is arranged near the nozzle, so that the tube is still warm. The extruded tube is irradiated with an UV lamp from outside the glass tube.

**V.** Cooling step
The extruded tube passes through air at room temperature for a given distance.

**VI.** Calibration
The extruded tube passes through an orifice with an inner diameter, that corresponds to the desired outer diameter of the tube into a water bath with a temperature of approximately 40 to 45° C, and leaves the water bath through an additional orifice with the same dimensions as the first one.

**VII.** Diameter measurement by Laser
The measurement is done in-line and the extrusion parameters are adjusted accordingly to get tubes with the intended dimensions.

**VIII.** Drying
The extruded tube passes through a conic hollow apparatus, wherein the tube is dried by blowing with compressed air.

**IX.** Haul-off
A band transporting mechanisms is used to pull the tube at a given speed out of the extruder and through the calibration unit.

**X.** Confection (discontinuous cutting)
The extruded tube was cut into samples of an intended length (approximately 0.5 m), and in advance of the cutting mechanism a loop hangs down as buffer for the cutting process.

**XI.** (Post) Crosslinking (separate from the former processing)
The extruded tube was cut to an appropriate length and was placed on a glass core. This assembly was then transferred into a glass tube that was heated to approximately 40 to 45 °C and filled with argon after evacuation. The quantitative crosslinking of the material was performed by irradiation with an UV lamp for approximately 12 hours.

The extrusion experiments were run with the parameters shown in table 3.

**Table 3. Extrusion Experiments**

| Material | Temperatures (°C) (zone 1 - zone 2 - zone 3 - one 4 - zone 5 - zone 6) | Rotation (rounds per minute) | Tube, outer diameter (mm) | Wall Thickness (mm) |
|---|---|---|---|---|
| **1** | 60-60-65-65-60-57<br>60-60-69-72-72-68 | 8<br>6 | 6<br>3 | 0.2<br>0.15 |
| **2** | 60-60-65-65-65-61<br>60-60-69-72-72-68 | 16<br>6 | 6<br>3 | 0.2<br>0.15 |
| **3** | 60-60-68-68-68-65<br>60-60-69-72-72-68 | 15<br>6 | 6<br>3 | 0.2<br>0.15 |

(continued)

| Material | Temperatures (°C) (zone 1 - zone 2 - zone 3 - one 4 - zone 5 - zone 6) | Rotation (rounds per minute) | Tube, outer diameter (mm) | Wall Thickness (mm) |
|---|---|---|---|---|
| **4** | 51-60-63-63-74-70<br>60-60-69-72-72-68 | 16<br>6 | 5,5<br>3 | 0.2<br>0.15 |
| **5** | 51-60-64-64-63-60 | 9 | 6 | 0.2 |
| **6** | 51-60-64-64-63-59 | 9 | 6 | 0.2 |
| **7** | 55-63-69-69-69-65<br>60-60-69-72-72-68 | 9<br>6 | 6<br>3 | 0.2<br>0.15 |
| **8** | 60-60-69-72-72-68 | 6 | 3 | 0.15 |
| **9** | 60-60-69-72-72-68 | 6 | 3 | 0.15 |
| **10** | 55-63-69-69-69-65<br>60-60-69-72-72-68 | 9<br>6 | 6<br>3 | 0.2<br>0.15 |
| **11** | 50-63-69-70-70-65 | 10 | 6 | 0.2 |
| **12** | 50-63-69-70-70-65 | 9 | 6 | 0.2 |
| **13** | 50-63-69-70-70-65 | 10 | 6 | 0.2 |
| **14** | 45-55-64-70-65-55 | 9 | 6 | 0.2 |
| **15** | 45-55-64-70-65-55 | 9 | 6 | 0.2 |
| **16** | 27-55-60-47-42-40 | 9 | 6 | 0.2 |
| **17** | 85-92-92-92-90-70 | 5 | 6 | 0.2 |
| **18** | 60-60-60-60-62-63 | 11 | 6 | 0.2 |
| **19** | 70-85-90-90-90-90 | 8 | 6 | 0.2 |
| **20** | 70-85-90-90-90-90 | 12 | 6 | 0.2 |
| **21** | 70-85-90-90-90-90 | 12 | 5 | 0.2 |
| **22** | 70-85-90-90-90-92 | 10 | 6 | 0.2 |
| **23** | 70-85-92-92-92-108 | 6 | 6 | 0.2 |
| **24** | 70-85-92-92-93-111 | 8 | 6 | 0.2 |
| **25** | 70-82-82-84-88-88 | 10 | 6 | 0.2 |
| **26** | 70-76-81-81-92-106 | 8 | 6 | 0.2 |
| **27** | 70-76-79-79-90-97 | 10 | 6 | 0.2 |
| **28** | 75-77-83-85-90-100 | 8 | 6 | 0.2 |
| **29** | 70-70-75-76-83-83 | 10 | 6 | 0.2 |
| **30** | 60-70-85-90-90-85 | 10 | 6 | 0.2 |
| **31** | 60-70-85-90-90-85 | 10 | 6 | 0.2 |

The gel content of the materials after crosslinking was in all cases greater than 90%.

**Discussion of the results**

The extruded tubes were evaluated qualitatively according to the criteria uniform profile (diameter of the tube, wall thickness, roundness), freedom from defects like bubbles and smoothness of the surface, and brittleness or elasticity. The results of this evaluation are discussed below.

After appropriate selection of the temperatures and the rotational speeds according to table 3, tubes could be extruded for all compositions including a polymer, regardless which of the extruder configurations **A** and **B** was used.

Tubes of high quality, in particular with very uniform and precise dimensions could generally be obtained using configuration **B**. With configuration **A** it was much more difficult to get satisfactory results, so that a higher optimizing effort was necessary. With configuration **B** it was even possible after the optimization, to extrude tubes from materials 14, 15 and 18, that did not include a polymer.

Configuration **B** generally gave better results in terms of a more uniform geometry of the tubes than configuration **A**, as the inner diameter of the tube was predetermined by the filament, and it was found, that the filament had a very effective supporting function for the mold. After extrusion and crosslinking, the tubes could be separated easily from the supporting filament.

It was found, that the temperatures in the middle and at the end of the extruder barrel (zones 2 to 5) have to be high, and, in particular, have to be from approximately 70° C to approximately 90° C, to produce tubes with little to no defects like inhomogeneous regions, and that a high temperature of the nozzle of from approximately 70° C to approximately 110° C reduces defects like longitudinal grooves in the extruded tubes.

If the temperature gradient within the extruder was optimized as explained above, even materials with a low thermoplast content of, for example, 5 weight-%, and even without thermoplast, could be extruded into tubes with a fully satisfactory dimensional uniformity and an acceptable brittleness. The temperature and rotational speed parameters were particularly adjusted in a way, that a sufficient viscosity of the melt was obtained, so that a stable film of polymer melt was achieved and the tube did not collapse (in configuration **A**), and the polymer did not flow from the filament (in configuration **B**).

Tubes of high quality could also be obtained if barium sulfate was present in the composition. The only drawback was a slightly reduced gel content of the products that could be tolerated.

Although the invention has been described and illustrated with a certain degree of particularity, it is understood that the present disclosure has been made only by way of example, and that numerous changes in the conditions and order of steps can be resorted to by those skilled in the art without departing from the spirit and scope of the invention.

## Claims

1. Method for the production of a shape memory polymer article in its permanent form, **characterized in that** a composition that includes at least one thermoplastic polymer and a covalently crosslinkable oligomeric composition is shaped by a molding process and thereafter covalently crosslinked by a crosslinking process, and wherein at least one of the thermoplastic polymer or the oligomeric composition comprises at least one segment, that can act as a soft segment to fix the temporary form of a shape memory polymer.

2. Method according to claim 1, further **characterized in that** the molding process is selected from the group consisting of injection molding, compression molding, transfer molding, extrusion molding, blow molding, rotational molding, thermoforming, vacuum forming, and laminating.

3. Method according to any of the preceding claims, further **characterized in that** the molding process is selected from the group consisting of injection molding, extrusion molding, blow molding, and rotational molding.

4. Method according to any of the preceding claims, further **characterized in that** the molding process is injection molding or extrusion molding.

5. Method according to any of the preceding claims, further **characterized in that** the mold covers after the forming process and before the crosslinking process a distance, where it is not in contact with a solid material.

6. Method according to any of the preceding claims, further **characterized in that** the oligomeric composition comprises at least one segment, that can act as a soft segment to fix the temporary form of a shape memory polymer.

7. Method according to any of the preceding claims, further **characterized in that** the composition comprises in relation to the non-volatile ingredients therein at least 0.5 weight-% of the thermoplastic polymer(s) and at least 30 weight-% of the crosslinkable oligomeric composition.

8. Method according to claim 7, further **characterized in that** the composition comprises in relation to the non-volatile ingredients therein from approximately 2 weight-% to approximately 40 weight-% of the thermoplastic polymer(s) and from approximately 40 weight-% to approximately 99.5 weight-% of the crosslinkable oligomeric composition.

9. Method according to any of the preceding claims, further **characterized in that** the at least one thermoplastic

polymer is selected from biodegradable polymers.

**10.** Method according to any of the preceding claims, further **characterized in that** the at least one thermoplastic polymer is selected from linear polyesters or copolymers thereof.

**11.** Method according to any of the preceding claims, further **characterized in that** the crosslinkable oligomeric composition includes biodegradable units.

**12.** Method according to any of the preceding claims, further **characterized in that** the crosslinkable oligomeric composition includes at least one crosslinkable oligomeric compound obtainable by terminal functionalization of oligomeric polyols.

**13.** Method according to any of the preceding claims, further **characterized in that** the shape memory polymer article is biodegradable.

**14.** Method according to any of the preceding claims, further **characterized in that** the crosslinking is performed at temperatures low enough, that the polymer is mechanically stable under the applied temperatures.

**15.** Shape memory polymer article, **characterized in that** it is produced using a method according to any of the preceding claims.

**16.** Shape memory polymer article according to claim 15, further **characterized in that** it is selected from sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

**17.** Shape memory polymer article according to any of claims 15 or 16, further **characterized in that** it at least partially encloses a hollow space.

**18.** Method of programming a shape memory polymer article, **characterized in that** the shape memory polymer article according to any of claims 15 to 17 is in the following order i) heated to a temperature that is above the transition temperature of at least one of its soft segments, but below the decomposition temperature of the article, ii) formed into an arbitrary shape, and fixed in this shape until iii) the temperature has been reduced below said transition temperature.

**19.** Shape memory polymer network article according to any of claims 15 to 17, further **characterized in that** it has at least one shape in memory.

**20.** Shape memory polymer network article according to claim 19, further **characterized in that** it has been produced by the method of claim 18.

**21.** Use of the shape memory polymer network article according to any of claims 15 to 17, 19 or 20.

European Patent Office

# EUROPEAN SEARCH REPORT

Application Number
EP 07 02 5235

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2007/167980 A1 (FIGULLA HANS R [DE] ET AL) 19 July 2007 (2007-07-19)<br>* paragraphs [0016], [0041] - [0050], [0055], [0061] - [0065] *<br>* paragraphs [0068] - [0070], [0076] - [0078], [0167]; figures 3-11 *<br>* claims 14-23 *<br>----- | 1-21 | INV.<br>C08J3/24<br>C08K3/00 |
| X | WO 2007/060022 A (MNEMOSCIENCE GMBH [DE]; LENDLEIN ANDREAS [DE])<br>31 May 2007 (2007-05-31)<br>* page 4, line 21 - page 6, line 3 *<br>* page 6, line 19 - page 7, line 10 *<br>* table 1 *<br>* claims 1-3 *<br>----- | 1-21 | |
| X | EP 0 831 119 A (DAICEL CHEM [JP])<br>25 March 1998 (1998-03-25)<br>* page 3, line 39 - page 4, line 2 *<br>* page 4, line 19 - page 4, line 29 *<br>* examples 1-4 *<br>* tables 1,2 *<br>* examples 9-12 *<br>* tables 4,5 *<br>* claims 1,8,28 *<br>----- | 1-21 | TECHNICAL FIELDS SEARCHED (IPC)<br>C08J<br>C08K |
| X | LENDLEIN A ET AL: "Formgedächtnispolymere - Formgedaechtniseffekt"<br>1 January 2002 (2002-01-01), ANGEWANDTE CHEMIE. INTERNATIONAL EDITION, WILEY VCH VERLAG, WEINHEIM, DE, PAGE(S) 2138 - 2162, XP002458624<br>ISSN: 1433-7851<br>* page 2155 - page 2158 *<br>-----<br>-/-- | 1-21 | |

1

The present search report has been drawn up for all claims

| Place of search | Date of completion of the search | Examiner |
|---|---|---|
| Munich | 6 May 2008 | Heidenhain, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

European Patent Office

# EUROPEAN SEARCH REPORT

Application Number
EP 07 02 5235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIN C ET AL: "BIODEGRADABLE SHAPE-MEMORY POLYMER-POLYLACTIDE-CO-POLY(GLYCOLIDE-CO-CAPROLACTONE) MULTIBLOCK COPOLYMER" POLYMERS FOR ADVANCED TECHNOLOGIES, WILEY & SONS, BOGNOR REGIS, GB, vol. 16, no. 8, 1 August 2005 (2005-08-01), pages 608-615, XP001239616 ISSN: 1042-7147 ----- | 1-21 | |
| | | | TECHNICAL FIELDS SEARCHED (IPC) |

The present search report has been drawn up for all claims

1

| Place of search | Date of completion of the search | Examiner |
|---|---|---|
| Munich | 6 May 2008 | Heidenhain, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 02 5235

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2008

| Patent document cited in search report | Publication date | Patent family member(s) | Publication date |
|---|---|---|---|
| US 2007167980 A1 | 19-07-2007 | NONE | |
| WO 2007060022 A | 31-05-2007 | EP 1790680 A1 | 30-05-2007 |
| EP 0831119 A | 25-03-1998 | US 6022550 A | 08-02-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6720402 B
- US 6388043 B
- US 6160084 B
- US 7217744 B
- US 6852825 B
- US 7037984 B
- WO 9942528 A
- WO 9942147 A
- WO 2004046221 A
- WO 2004062706 A
- WO 2004090042 A
- WO 2005012388 A
- WO 2005028534 A
- WO 2007096708 A
- EP 1846470 A
- EP 1818348 A
- EP 1818161 A
- EP 1837160 A
- EP 1818346 A
- WO 2004006885 A
- US 20060140999 A
- US 6160084 A
- US 5108755 A